# EUROPÄISCHE PATENTSCHRIFT

(11) **EP 1 002 187 B1**
(45) Veröffentlichungstag und Bekanntmachung des Hinweises auf die Patenterteilung: **11.12.2002**
(21) Anmeldenummer: 98940269.8
(22) Anmeldetag: 07.08.1998
(51) Int. Cl.: F01N 3/28

(54) **ABGASSYSTEM**
GAS EXHAUST SYSTEM
SYSTEME D'ECHAPPEMENT DE GAZ

(30) Priorität: 22.08.1997 DE 19736638; 30.08.1997 DE 19738021; 15.11.1997 DE 19750733; 01.04.1998 DE 19814585
(43) Veröffentlichungstag der Anmeldung: 24.05.2000
(73) Patentinhaber: Deutsches Zentrum für Luft- und Raumfahrt e.V., 53175 Bonn (DE); Ford Global Technologies, Inc., A subsidiary of Ford Motor Company, Dearborn, Michigan 48126 (US)
(72) Erfinder: BECKER, Manfred, D-53797 Lohmar-Heide (DE); HOFFSCHMIDT, Bernhard, D-51469 Bergisch Gladbach (DE); MEURER, Josef, D-53844 Troisdorf (DE)
(74) Vertreter: Hilleringmann, Jochen, Dipl.-Ing.
(86) Internationale Anmeldenummer: EP9805022
(87) Internationale Veröffentlichungsnummer: WO99010634

(56) Entgegenhaltungen:
- EP-A- 0 579 415
- US-A- 5 209 062
- US-A- 5 220 789
- US-A- 5 396 764

## Beschreibung

Die Erfindung betrifft ein Abgassystem für eine Verbrennungskraftmaschine, insbesondere für Fahrzeuge.

Abgassysteme für Verbrennungskraftmaschinen weisen einen Sammler auf, in dem die von den einzelnen Verbrennungskammern kommenden Krümmerrohre zu einem Abgasrohr zusammengeführt sind. Das Abgasrohr ist im allgemeinen unter der Bodenbaugruppe des Fahrzeugs nach hinten geführt. Zur Abgasreinigung ist in dem Abgasrohr unter der Bodenbaugruppe des Fahrzeugs ein Katalysator mit einem oder mehreren Katalysatorelementen angeordnet.

Die katalytische Wirkung einer auf dem Katalysatorelement vorgesehenen Beschichtung tritt erst ab einer relativ hohen Betriebstemperatur ein. Wenn der Abstand zwischen dem Sammler und dem Katalysator relativ groß ist, wird die Betriebstemperatur des Katalysators erst einige Zeit nach dem Start der Verbrennungskraftmaschine erreicht (z. B. nach zwei Minuten). Da viele Fahrzeuge in erster Linie für Kurzstreckenfahrten verwendet werden, hat der Katalysator bei einem beträchtlichen Teil seiner Betriebszeit die erforderliche Betriebstemperatur nicht erreicht.

Um die Aufwärmzeit des Katalysators, d. h. die Zeit bis zum Erreichen der erforderlichen Betriebstemperatur zu verkürzen, werden Zusatzheizungen wie beispielsweise eine induktive Beheizung des Katalysators oder eine Erwärmung des Abgasstroms durch Gas- oder Benzinbrenner oder durch Wärmespeicher kurz vor dem Katalysator eingesetzt. Durch das Einsetzen von Zusatzheizungen werden das Gewicht, der Raumbedarf und die Kosten erhöht.

Um die Aufwärmzeit des Katalysators zu verringern, kann der Katalysator möglichst nahe am Sammler angeordnet werden. Durch eine derartige Anordnung des Katalysators kann die erforderliche Betriebstemperatur sehr kurz nach dem Start der Verbrennungskraftmaschine erreicht werden. Bei dieser Anordnung des Katalysators in der Nähe des Sammlers können sich jedoch unverbrannte Verbrennungsgasgemische in dem Katalysator niederschlagen und sich dort entzünden. Die dabei entstehenden hohen Verbrennungstemperaturen sowie die schlagartige Druckerhöhung können zu einer Beschädigung des Katalysators führen. In der Nähe des Sammlers auftretende Druckschwankungen im Abgasstrom, die durch die zeitlichen Abstände zwischen den Auslaßtakten der Verbrennungskammern hervorgerufen werden, führen zu einer Verschlechterung des Wirkungsgrades des Katalysators. Ferner ist die Strömungsverteilung über den Querschnitt des Abgasrohrs in Strömungsrichtung kurz hinter dem Sammler stark inhomogen. Aufgrund der Inhomogenität der Strömung treten im Katalysator lokale Überbeanspruchungen auf, durch die er zerstört werden kann.

US-A-5 396 764 beschreibt ein Abgassystem mit einem Sammler, einem in Durchströmrichtung hinter dem Sammler angeordnetes Katalysatorelement und einem zwischen dem Sammler und dem Katalysatorelement Filter aus porösem, temperaturbeständigem Material (ceramic cordierite). Dieses Filter bewirkt durch seine Form und Anordnung der Filteröffnungen auch eine Vermischung des Abgasstroms.

Aufgabe der Erfindung ist es, ein Abgassystem zu schaffen, bei dem der Katalysator nahe dem Sammler angeordnet werden kann und ein Beschädigen des Katalysators vermieden ist.

Die Lösung der Aufgabe erfolgt erfindungsgemäß durch die Merkmale des Anspruchs 1.

Bei dem erfindungsgemäßen Abgassystem für eine Verbrennungskraftmaschine ist zwischen dem Sammler und dem Katalysator ein Mischer aus porösem, temperaturbeständigem Material angeordnet. Durch den Mischer wird die Strömungsverteilung über den Querschnitt des Abgasrohrs homogenisiert, so daß dadurch hervorgerufene lokale Überbeanspruchungen ausgeschlossen sind. Ebenso werden durch den Mischer Druckschwankungen, die durch die unterschiedlichen Öffnungszeitpunkte der Auslaßventile hervorgerufen werden, ausgeglichen. Ferner dient der Mischer aufgrund seiner porösen Struktur auch als Filter in dem sich unverbranntes Verbrennungsgemisch niederschlägt. Das Verbrennen der Niederschläge findet im Mischer statt, so daß eine hierdurch hervorgerufene Zerstörung oder Beschädigung des Katalysators ausgeschlossen ist. Aufgrund der Temperaturbeständigkeit des Mischers wird durch das Verbrennen der Niederschläge der Mischer nicht beschädigt.

Um einen zu großen Rückstau des Abgasstroms aufgrund des Mischers zu vermeiden und um die Homogenität der Strömungsverteilung über den Querschnitt des Abgasrohrs zu verbessern, weist der erfindungsgemäße Mischer eine Anzahl von ersten Kanälen aufweisen, die in einem Winkel zur Durchströmungsrichtung angeordnet sind. Vorzugsweise weist der Mischer ferner eine Anzahl von zweiten Kanälen auf, die sowohl einen Winkel zu den ersten Kanälen als auch einen Winkel zur Strömungsrichtung aufweisen.

Vorzugsweise besteht der Mischer aus einem keramischen Schaumkörper. Keramische Schaumkörper sind porös und weisen ferner eine hohe Temperaturbeständigkeit auf.

Der Mischer kann am Ausgang des Sammlers und innerhalb des Abgasrohrs zwischen dem Sammler und dem Katalysator angeordnet sein. Vorzugsweise ist der Mischer unmittelbar vor dem Katalysator oder innerhalb des Katalysatorgehäuses angeordnet.

Zur Herstellung von porösen, temperaturbeständigen Mischern können flexible Kunststoffschaumkörper verwendet werden, die mit Benetzungsmaterial benetzt werden. Durch die Benetzung wird die gesamte Oberfläche der Struktur des Kunststoffschaumkörpers mit dem Benetzungsmaterial, beispielsweise keramischem Schlicker versehen. Anschließend wird das Benetzungsmaterial ausgehärtet. Zum Aushärten wird der benetzte Kunststoffschaumkörper so stark erhitzt, daß das Kunststoffschaummaterial durch Verbrennen entfernt wird.

Zur Herstellung eines in dem Abgassystem verwendbaren Mischers ist folgendes Verfahren als besonders vorteilhaftes Herstellungsverfahren vorgeschlagen, bei dem
- mindestens ein Kunststoffschaumkörper mit einer Oberseite und einer Unterseite aus einem flexiblen Kunststoffschaummaterial erzeugt wird,
- der Schaumkörper um einen Scherwinkel in eine erste Richtung geschert wird, indem er einer ersten Scherkraft ausgesetzt wird,
- in den so gescherten Kunststoffschaumkörper von der Oberseite und/oder der Unterseite erste Kanäle eingebracht werden, und zwar in einem vom ersten Scherwinkel verschiedenen Winkel zur Normalen der Oberseite und/oder der Unterseite und
- die erste Scherkraft wieder aufgehoben wird, wobei sich der Kunststoffschaumkörper wieder zurückstellt.

Das Verfahren beruht auf dem Kerngedanken, in eine flexible Schaumstruktur zunächst diese durchziehende Kanäle einzubringen. Diese Kanäle verlaufen zwecks verbesserter Durchmischung des den Körper durchströmenden Fluids schräg zur axialen Erstreckung des Körpers. Man könnte diese schrägverlaufenden Kanäle unter einem Winkel von ungleich 90° zur Ober- bzw. Unterseite der Schaumstruktur bzw. des Schaumkörpers einbringen. Dies erschwert jedoch den Fertigungsprozeß, was insbesondere in der flexiblen Struktur des Schaumkörpers begründet ist. Bei einer ersten Variante wird daher vorgeschlagen, den Schaumkörper zu scheren, d. h. auf den Schaumkörper Scherkräfte einwirken zu lassen. Jetzt können die Kanäle unter einem Winkel von insbesondere 90° zur Ober- bzw. Unterseite des gescherten Schaumkörpers eingebracht werden. Wird danach die auf den Schaumkörper wirkende Scherkraft aufgehoben, so daß sich der Schaumkörper in seinem entspannten Zustand befindet, so verlaufen die den Schaumkörper durchziehenden Kanäle schräg.

Auf die zuvor beschriebene Weise lassen sich in einer ersten Richtung verlaufende erste Kanäle in den Kunststoffschaumkörper einbringen. Wird der Kunststoffschaumkörper nach Einbringung der ersten Kanäle in einer anderen Richtung geschert, die vorzugsweise entgegengesetzt zur Wirkrichtung der zuvor aufgebrachten Scherkraft gerichtet ist, so lassen sich zweite Kanäle in den Schaumkörper einbringen, die in einer zu den ersten Kanälen verschiedenen Richtung durch den Schaumkörper verlaufen. Der Kunststoffschaumkörper ist damit von zwei Gruppen von Kanälen durchzogen, die unterschiedliche Ausrichtungen aufweisen.

In Abhängigkeit von der Größe der Scherkräfte und deren Wirkrichtungen lassen sich unterschiedlich stark geneigt verlaufende Kanäle in einen Kunststoffschaumkörper einbringen. Die Ausrichtung der Kanäle hängt nicht zuletzt auch davon ab, unter welchem Winkel sie in den gescherten Schaumkörper eingebracht werden.

Die Verfahrensschritte des Scherens des Kunststoffschaumkörpers und des Einbringens von Kanälen können auch gleichzeitig durchgeführt werden. Hierzu kann beispielsweise ein Stanzwerkzeug auf die Ober- oder Unterseite des unverformten Schaumkörpers, auf den noch keine Scherkräfte wirken, aufgesetzt werden. Sobald das Stanzwerkzeug eine Seite des Schaumkörpers berührt, wird es bezüglich der gegenüberliegenden Seite des Kunststoffschaumkörpers verschoben, so daß auf den Schaumkörper Scherkräfte wirken. Der Stanzvorgang wird entweder nach Erreichen des gewünschten Scherwinkels oder bereits während des Schervorgangs durchgeführt. Es ist somit ausreichend, das Stanzwerkzeug während des Stanzvorgangs bezüglich der gegenüberliegenden Seite des Schaumkörpers zu verschieben, so daß auf den Schaumkörper Scherkräfte wirken.

Damit die in den Schaumkörper gestanzten Kanäle einen möglichst kreisrunden Querschnitt haben, kann der Schaumkörper vor oder während dem Stanzen stark zusammengedrückt und dabei komprimiert werden.

Bei einer Variante des Verfahrens werden die Kanäle in einen Schaumkörper eingebracht, ohne daß dieser geschert wird. Bei dieser Variante werden zunächst erste Kanäle in eine Außenfläche eines Schaumkörpers eingebracht. Anschließend wird der Schaumkörper geschnitten, wobei seine Schnittfläche unter einem spitzen Winkel zur Längserstreckung der ersten Kanäle verläuft. Ein derart beschnittener Schaumkörper kann weiterverarbeitet werden, bis sich ein Tafelmaterial einstellt, dessen Unter- bzw. Oberseiten parallel zueinander verlaufen, wobei eine Seite durch die Schnittfläche bestimmt ist.

Bei der zuvor beschriebenen Variante können nach dem Schneiden des Kunststoffschaumkörpers in die Schnittfläche zweite Kanäle eingebracht werden, woraufhin der Kunststoffschaumkörper anschließend nochmals geschnitten wird, und zwar derart, daß diese Schnittfläche unter einem spitzen Winkel zu sämtlichen Kanälen verläuft. Wird auch der so beschnittene Kunststoffschaumkörper weiterverarbeitet, so daß Tafelmaterial oder Schaumstoffblöcke entstehen, liegt eine Schaumstruktur vor, die von schräg zueinander verlaufenden Kanälen durchzogen ist und zueinander parallele Ober- bzw. Unterseiten aufweist, von denen mindestens eine durch die (zweite) Schnittfläche bestimmt ist.

In der allgemeinsten Form wird durch dieses vorteilhafte Herstellungsverfahren eine Schaumstruktur geschaffen, die von schräg verlaufenden Kanälen durchzogen ist, wobei diese Kanäle gruppenweise parallel zueinander verlaufen und in mehrere Gruppen von zueinander unterschiedlich verlaufenden Kanälen unterteilt werden kann. Derartige Schaumstoffkörper dienen beispielsweise als Halbzeuge zur Herstellung keramischer Schäume, auf diese Materialien und deren auf die Schaumkörper aufbauenden Verfahrensprozesse wird weiter unten noch eingegangen werden.

Zweckmäßigerweise werden mehrere derartig hergestellte Schaumkörper übereinanderliegend angeordnet, so daß auf diese Weise ein von einem Fluid durchströmbarer Körper mit Mischereigenschaften erzeugt werden kann, und zwar ohne durch den Herstellungsprozeß bedingte Längenbeschränkungen. Die einzelnen Schaumkörper werden vorzugsweise als geometrisch beliebiges Tafelmaterial mit zueinander parallelen Ober- und Unterseiten erzeugt.

Die Einbringung der Kanäle in den Schaumkörper erfolgt vorzugsweise durch Stanzen. Eine derartige Stanze weist zwei Andrückteile auf, die mit Reibung an der Ober- und Unterseite des Schaumkörpers anliegen. Nachdem diese beiden Andruckteile in Reibschluß mit dem Kunststoffschaumkörper gebracht worden sind, wird zumindest das eine Andrückteil relativ zum anderen bewegt, so daß der dazwischen angeordnete Kunststoffschaumkörper geschert wird. Nun kann das Stanzwerkzeug in den Kunststoffschaumkörper eingefahren werden. Dabei bietet es sich an, den gescherten Kunststoffschaumkörper durch Aufeinanderzubewegen der Andrückteile so weit zu komprimieren, daß sich die Löcher mittels Stanzwerkzeugen einbringen lassen.

Zweckmäßig ist es ferner, wenn die Andrückteile gelocht sind, so daß die Stanzwerkzeuge durch die Löcher hindurch in den Kunststoffschaumkörper hineingebracht werden können. In demjenigen Zustand, in dem der Kunststoffschaumkörper gestanzt wird, sollten die Löcher der beiden Andrückteile miteinander fluchten.

Mit dem Verfahren läßt sich also ein von einem Fluid durchströmbarer poröser Körper herstellen, der entweder einen Kunststoffschaumkörper oder mehrere übereinander angeordnete Kunststoffschaumkörper aufweist, der bzw, von denen jeder ein oder mehrere um einen gemeinsamen Winkel oder unterschiedliche Winkel schräg verlaufende Kanäle aufweist. Aufgrund der porösen Struktur des Kunststoffschaummaterials sind diese Kanäle untereinander verbunden. Bei Verwendung mehrerer Kunststoffschaumkörper ist es zweckmäßig, wenn die Ausrichtung der aneinander grenzenden Kanäle benachbarter Schaumkörper jeweils unterschiedlich, insbesondere gegensinnig ist.

Bei dem Kunststoffschaummaterial handelt es sich zweckmäßigerweise um ein offenzelliges oder geschlossenzelliges Material. Insbesondere wird als Kunststoffschaummaterial Polyurethan eingesetzt.

Auf der Basis der gemäß obigem Verfahren hergestellten Schaumkörper lassen sich starre Schäume, insbesondere keramische Schäume herstellen, indem der Kunststoffschaumkörper bzw. die mehreren aneinanderliegenden Kunststoffschaumkörper mit Benetzungsmaterial benetzt wird bzw. werden. Diese Benetzung muß man sich derart vorstellen, daß die gesamte Oberfläche der Struktur jedes Kunststoffschaumkörpers mit dem Benetzungsmaterial versehen ist. Vorzugsweise wird als Benetzungsmaterial Schlicker eingesetzt. Grundsätzlich ist es wichtig, daß das Benetzungsmaterial aushärtet, so daß nach dem Aushärten ein selbständig tragfähiger benetzter Kunststoffschaumkörper entsteht, dessen Eigenformstabilität und Eigentragfähigkeit durch das Benetzungsmaterial gegeben ist. In dem so erstellten porösen Körper befinden sich also zum einen die Kanäle, deren Innenwände von dem Benetzungsmaterial benetzt sind, und zum anderen die Verbindungen zwischen benachbarten Kanälen, die ebenfalls an ihren Innenwänden benetzt sind. Anschließend wird dieser von ausgehärtetem Benetzungsmaterial benetzte Schaumkörper so stark erhitzt, daß das Kunststoffschaummaterial durch Verbrennung entfernt wird. Eine alternative Methode der Entfernung des Kunststoffschaummaterials besteht in einer Verflüchtigung in Folge beispielsweise einer chemischen Reaktion mit einem entsprechenden Behandlungsgas.

Auf die oben beschriebene Weise lassen sich mit Kanälen versehene poröse Körper beliebiger Länge herstellen, und zwar auch dann, wenn die Kanäle Hinterschneidungen oder dergleichen dreidimensional sich verändernde Verläufe aufweisen. Der Vorteil eines derartigen Mischers (poföser Körper mit diesen durchziehenden Kanälen) besteht auch darin, daß sein Strömungswiderstand nur gering ist. Sicherlich würde man auch bei einem porösen Körper einen Fluiddurchsatz erzielen können, allerdings unter Entstehung eines wesentlich höheren Strömungswiderstandes, als dies bei dem nach vorstehendem Verfahren hergestellten porösen Körper der Fall ist.

In vorteilhafter Weise erfolgt das Benetzen durch Tränken des Kunststoffschaumkörpers bzw. der Kunststoffschaumkörperanordnung mit dem Benetzungsmaterial. Diese Verfahrensweisen sind grundsätzlich von der Herstellung keramischer Schäume her bekannt. Der keramische Schlicker wird durch Brennen ausgehärtet. Hierbei wird gleichzeitig auch das Kunststoffmaterial durch Verdampfen entfernt.

Werden mehrere Kunststoffschaumkörper aneinanderliegend mit Benetzungsmaterial versehen, so ist es zweckmäßig, die Kunststoffschaumkörper vor der Benetzung untereinander zu verbinden. Hier bietet es sich an, die Kunststoffschaumkörper durch Erhitzung ihrer Anlageflächen miteinander zu verschweißen. Eine Alternative zu dieser Verbindung besteht darin, die Kopplung benachbarter Kunststoffschaumkörper durch das ausgehärtete Benetzungsmaterial zu realisieren.

Da der Kunststoffschaummaterialkörper bzw. die Anordnung aufeinanderfolgender Kunststoffschaummaterialkörper bei noch nicht ausgehärtetem Benetzungsmaterial noch flexibel ist, läßt er bzw. sie sich in gekrümmte oder in sonstiger Weise geformte Formen einlegen (beispielsweise Krümmer-Formen oder dergleichen), um dann in diesen Formen beispielsweise durch Brennen auszuhärten. Damit wird dem fertigen Produkt eine Form verliehen, die den platzsparenden Einbau in einer Mischeranlage oder einer Rohrleitung einer solchen Mischeranlage ermöglicht.

Bei dem Verfahren ist als besonders vorteilhaft herauszustellen, daß zur Herstellung der Kunststoffschaummaterialkörper auf die üblichen Herstellungsprozesse für Schäume zurückgegriffen werden kann. Die zumeist in Form von Blöcken hergestellten Schäume müssen lediglich zu Tafelmaterial verarbeitet werden, was dann erfindungsgemäß geschert wird, um die Kanäle einzubringen. Die Herstellung von Blockschaum ist recht kostengünstig, so daß insgesamt nach dem erfindungsgemäßen Verfahren auch die starren von Fluid durchströmbaren Körper verhältnismäßig kostengünstig hergestellt werden können, wobei man insbesondere auf die wohlbeherrschte Technologie der Schaumherstellung zurückgreifen kann. Es sind insbesondere keine besonderen Formen für die Schaumherstellung erforderlich. Man greift also im Rahmen des erfindungsgemäßen Herstellungsverfahrens auf ein Halbzeug, nämlich Kunststoffschaum-Tafelmaterial zurück, was extrem kostengünstig angeboten wird. Auch die weiteren Verfahrensschritte, insbesondere die Einbringung der schrägverlaufenden Kanäle erfolgt erfindungsgemäß auf einfache und produktionstechnisch kostengünstige Art und Weise.

Zur Herstellung des in dem Abgassystem verwendbaren Mischers mit diesen durchziehenden Kanälen ist ferner ein weiteres vorteilhaftes Verfahren vorgeschlagen, bei dem
- in eine Form mindestens ein den Verlauf und die Formgebung mindestens eines Kanals definierendes Einsatzteil eingesetzt wird,
- in die Form ein Kunststoffschaummaterial eingebracht wird, so daß das mindestens eine Einsatzteil in dem nach Aushärtung flexiblen Kunststoffschaumkörper eingebettet ist,
- der Kunststoffschaumkörper aus der Form und das mindestens eine Einsatzteil aus dem Kunststoffschaumkörper entnommen werden,
- die Oberfläche des Kunststoffschaumkörpers mit einem aushärtbaren Benetzungsmaterial benetzt wird und
- das Kunststoffschaummaterial des mit Benetzungsmaterial benetzten Kunststoffschaumkörpers durch Erhitzen desselben entfernt wird, so daß ein von Fluid durchströmbarer, poröser, aus dem Benetzungsmaterial bestehender Körper entsteht.

Dieses Verfahren beruht auf dem Kerngedanken, in eine flexible Schaumstruktur zunächst diese durchziehende Kanäle einzubringen. Dies erfolgt erfindungsgemäß dadurch, daß ein den Verlauf des späteren Kanals darstellendes Einsatzteil von einem Kunststoffschaummaterial umschäumt und in dieses eingebettet wird. Alternativ können mehrere derartige Einsatzteile verwendet werden. Die Einsatzteile können eine sich in allen drei Dimensionen verändernde Struktur aufweisen, so daß letztendlich nicht nur geradlinige sondern auch krummlinige Kanäle erzeugt werden können. Das Kunststoffschaummaterial ist nach seiner Aushärtung flexibel, so daß die Einsatzteile aus dem Kunststoffschaummaterial herausgezogen werden können. Danach verbleibt also ein Kunststoffschaumkörper, der von ein oder mehreren geradlinig oder krummlinig verlaufenden Kanälen durchzogen ist, wobei die Kanäle aufgrund der porösen Struktur des Kunststoffschaummaterials untereinander verbunden sind. Bei dem Kunststoffschaummaterial handelt es sich zweckmäßigerweise entweder um offenzelliges oder geschlossenzelliges Material. Insbesondere wird als Kunststoffschaummaterial Polyurethan eingesetzt.

Nachdem das oder die Einsatzteile aus dem Kunststoffschaumkörper herausgezogen worden sind, wird der Kunststoffschaumkörper mit einem Benetzungsmaterial benetzt. Diese Benetzung muß man sich derart vorstellen, daß die gesamte Oberfläche der Struktur des Kunststoffschaumkörpers mit dem Benetzungsmaterial versehen ist. Vorzugsweise wird als Benetzungsmaterial Schlicker eingesetzt. Grundsätzlich ist es wichtig, daß das Benetzungsmaterial aushärtet, so daß nach dem Aushärten des Benetzungsmaterials ein selbständig tragfähiger benetzter Kunststoffschaumkörper entsteht, dessen Eigenformstabilität und Eigentragfähigkeit durch das Benetzungsmaterial gegeben ist. In dem so erstellten porösen Körper befinden sich also zum einen die Kanäle, deren Innenwände von dem Benetzungsmaterial benetzt sind, und zum anderen die Verbindungen zwischen benachbarten Kanälen. Anschließend wird dieser von ausgehärtetem Benetzungsmaterial benetzter Kunststoffschaumkörper so stark erhitzt, daß das Kunststoffschaummaterial durch Verbrennung entfernt wird.

Auf die oben beschriebene Weise lassen sich mit Kanälen versehene poröse Körper beliebiger Länge herstellen, und zwar auch dann, wenn die Kanäle Hinterschneidungen oder dergleichen dreidimensional sich verändernde Verläufe aufweisen. Ein derartiger Körper kann durch Aufbringen einer beispielsweise katalytisch wirkenden Schicht auch als Katalysator eingesetzt werden. Mit bzw. ohne diese zusätzliche Schicht läßt er sich in jedem Fall als chemischer Mischer einsetzen, der eine ihn durchziehende Strömung aus einem Fluidgemisch vergleichmäßigt und dadurch die Fluide vermischt. Der Vorteil eines derartigen Mischers (poröser Körper mit diesen durchziehenden Kanälen) besteht auch darin, daß sein Strömungswiderstand nur gering ist. Sicherlich würde man auch bei einem porösen Körper einen Fluiddurchsatz erzielen können, allerdings unter Entstehung eines wesentlich höheren Strömungswiderstandes, als dies bei dem nach einem der vorstehenden Verfahren hergestellten porösen Körper der Fall ist.

Gemäß einer weiteren vorteilhaften Variante kann der Mischer des Abgassystems hergestellt werden, indem
- eine wellenförmige flexible Matte aus Kunststoffschaummaterial hergestellt wird,
- die Matte zu einem Kunststoffschaumkörper aufgewickelt wird,
- die Oberfläche des Kunststoffschaumkörpers mit einem aushärtbaren Benetzungsmaterial benetzt wird und
- das Kunststoffschaummaterial des mit Benetzungsmaterial benetzten Kunststoffschaumkörpers durch Erhitzen desselben entfernt wird, so daß ein von Fluid durchströmbarer, poröser, aus dem Benetzungsmaterial bestehender Körper entsteht.

Bei dieser Herstellungsvariante wird eine wellenförmige flexible Matte aus offen- bzw. geschlossenzelligem Kunststoffschaummaterial erzeugt, die anschließend zu einem (Wickel-)Körper aufgewickelt wird. Der auf diese Weise entstandene Kunststoffschaummaterialkörper ist von Kanälen durchzogen, die zwischen den Tälern und Bergen benachbarter Wicklungen der wellenförmigen flexiblen Matte entstehen. Der Wickelkörper behält beispielsweise seine Wickelstruktur durch Einsatz eines Klebemittels bei.

Die Einsatzteile können starr oder vorzugsweise flexibel und/oder aufblasbar sein. Nachdem der Kunststoffschaumkörper hergestellt ist, können die bis dahin aufgeblasenen Einsatzteile entlüftet bzw. entspannt werden, um alsdann aus dem Kunststoffschaumkörper entfernt zu werden. Sofern die Einsatzteile nicht aufblasbar, jedoch flexibel sind, lassen sie sich auch infolge ihrer Flexibilität bequem aus dem Schaumstoff herausziehen.

Nach Herstellung dieses Wickelkörpers erfolgt wiederum die Benetzung mit Benetzungsmaterial, das anschließend aushärtet. Danach wird der so erstellte Körper erhitzt, um das Kunststoffschaummaterial zu entfernen. Die mit dem nach dieser Variante hergestellten porösen Körper erzielbaren Vorteile sind identisch zu den im Zusammenhang mit der ersten erfindungsgemäßen Variante beschriebenen Vorteilen. Zusätzlich kommt bei der zweiten Herstellungsvariante noch hinzu, daß das Herstellungsverfahren einfacher ist, da keinerlei Einsatzteile in Kunststoffschaummaterial eingebettet werden und anschließend aus dem ausgehärteten und noch flexiblen Kunststoffschaummaterial herausgezogen werden müssen.

Nachfolgend wird anhand der Figuren ein Ausführungsbeispiel des erfindungsgemäßen Abgassystems sowie mehrere Verfahren zur Herstellung des in dem Abgassystem angeordneten Mischers näher erläutert. Im einzelnen zeigen:
- Fig. 1: eine schematische Darstellung eines Abgassystems mit innerhalb eines Katalysatorgehäuses angeordnetem Mischer,
- Fign. 2 bis 6: schematisch die einzelnen Herstellungsschritte zur Erzeugung eines von schrägverlaufenden Kanälen durchzogenen Kunststoffschaummaterialkörpers,
- Fig. 7: einen Schnitt durch einen aus mehreren gemäß den Fign. 2 bis 6 erzeugten Kunststoffschaummaterialkörpern aufgebauten Schaumkörper,
- Fig. 8: eine perspektivische Ansicht eines Kunststoffschaumkörpers, teilweise aufgebrochen,
- Fign. 9 bis 12: schematisch die einzelnen Herstellungsschritte zur Erzeugung eines von schrägverlaufenden Kanälen durchzogenen Kunststoffschaummaterialkörpers gemäß einer alternativen Ausgestaltung des Herstellungsverfahrens,
- Fign. 13 bis 17: die einzelnen Herstellungschritte zur Erzeugung des von Kanälen durchzogenen Kunststoffschaummaterialkörpers gemäß einem weiteren Ausführungsbeispiel,
- Fign. 18 und 19: die für die Herstellung eines flexiblen Kunststoffschaummaterialkörpers mit diesen durchziehenden Kanälen erforderlichen Formen bzw. Einsatzteile gemäß einem weiteren Ausführungsbeispiel und
- Fign. 20 und 21: die Herstellung eines flexiblen Kunststoffschaummaterialkörpers mit diesen durchziehenden Kanälen gemäß einem weiteren Ausführungsbeispiel, nämlich in Wickeltechnik.

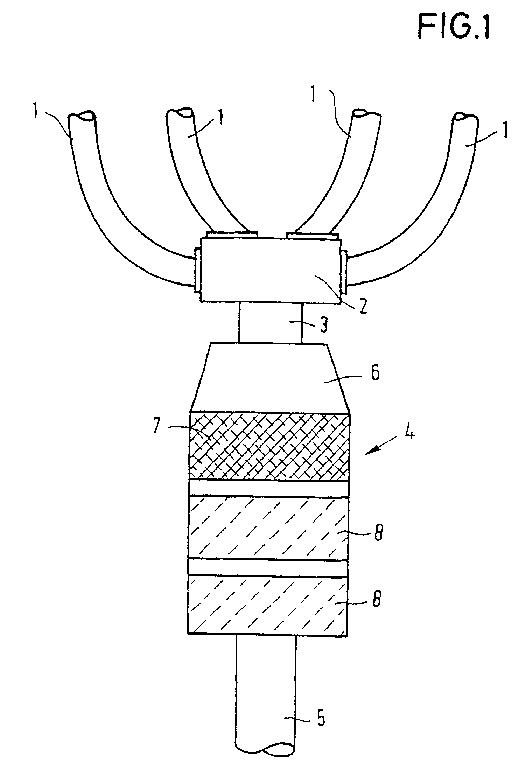

Ein Abgassystem für eine Verbrennungskraftmaschine (Fig. 1) weist bei einer Verbrennungskraftmaschine mit vier Zylindern vier Krümmungsrohre 1 auf, die in einen Sammler 2 geführt sind. Der Sammler 2 ist mit einem Abgasrohr 3 verbunden durch das die Abgase aus dem Sammler 2 abgeführt werden. Mittels des Sammlers 2 werden somit sämtliche durch die Krümmungsrohre 1 geleiteten Abgase zusammengeführt und in ein einziges Abgasrohr 3 geleitet. Bei mehrzylindrigen Verbrennungskraftmaschinen ist es ebenfalls bekannt, anstatt eines Sammlers, in den sämtliche Krümmungsrohre geführt werden, mehrere Zwischensammler vorzusehen, in die beispielsweise jeweils zwei Krümmungsrohre geführt sind. An die Zwischensammler ist sodann ein Sammler angeschlossen, in dem die aus den Zwischensammlern kommenden Rohre zusammengeführt werden.

Das Abgasrohr 3 ist mit einem Katalysator 4 verbunden, so daß die Abgase durch das Abgasrohr 3 in den Katalysator 4 geleitet werden. Der Auslaß des Katalysators 4 ist mit einem Endrohr des Abgassystems 5 verbunden, aus dem die Abgase austreten oder in sog. Auspufftöpfe geleitet werden.

Der Katalysator 4 weist ein Katalysatorgehäuse 6 auf, in dem ein Mischer 7 und zwei Katalysatorelemente 8 angeordnet sind. Durch den Mischer 7, der sich über den gesamten Querschnitt des zylindrischen Katalysatorgehäuses 6 erstreckt, werden die in den Katalysator 4 aus dem Abgaskanal 3 einströmenden Verbrennungsgase gemischt. Ferner bewirkt der Mischer 7 eine Vergleichmäßigung des zeitlichen Druckverlaufs, der in Abhängigkeit von den unterschiedlichen Öffnungszeitpunkten der Auslaßventile schwankt. Durch den Mischer 7 ist der Druckverlauf über den Querschnitt des Katalysatorgehäuses 6 und zeitlich homogenisiert. Zusätzlich wirkt der Mischer 7 als Filter, der unverbrannte Verbrennungsgemische aus dem Abgasstrom ausfiltert. Den Katalysatorelementen 8 wird daher ein über den Querschnitt und zeitlich homogensierter und von unverbrannten Verbrennungsgemischen freier Abgasstrom zugeführt. Die Katalysatorelemente 8 werden somit auch dann nicht beschädigt und weisen einen hohen Wirkungsgrad auf, wenn der Katalysator 4 direkt hinter dem Sammler 2 angeordnet ist.

Zusätzlich wird der Abgasstrom dadurch homogenisiert, daß der Durchmesser der Eintrittsöffnung, an der das Zuführrohr 3 in das Katalysatorgehäuse 6 mündet, kleiner ist als der Durchmesser des Katalysatorgehäuses 6 in Strömungsrichtung direkt nach der Eintrittsöffnung. Aufgrund dieser sprungartigen Durchmesservergrößerung tritt der Abgasstrom als Freistrahl in den Katalysator 4 ein und breitet sich in diesem bis zum Erreichen des Mischers 7 als Freistrahl aus. Unter Freistrahl wird eine Strömung verstanden, die nicht durch Rohrwände o. dgl. begrenzt ist und sich insofern in radialer Richtung frei ausbreiten kann.

Aufgrund des Vorsehens des Mischers 7 ist es auch möglich, den Sammler 2 und den Katalysator 4 zu einer Einheit zusammenzufassen.

Anhand der nachfolgenden Figuren werden unterschiedliche Herstellungsverfahren für den Mischer 7 aus porösem temperaturbeständigem Material beschrieben:

Für ein bevorzugtes Herstellungsverfahren wird jeweils Schaum verwendet, der in seinen üblichen Produktionsgrößen (beispielsweise 60 m x 1,5 m x 0,8 m) als Block hergestellt wird. Bei diesem Schaum handelt es sich insbesondere um geschlossenzelliges Material, das in einem zweiten an sich gängigen Verfahren mittels kontrollierter Druckwelle bzw. Explosion bearbeitet wird, so daß die geschlossenen Zellen des Schaums geöffnet werden. Auf diese Weise entsteht ein Block aus offenporigem Schaum.

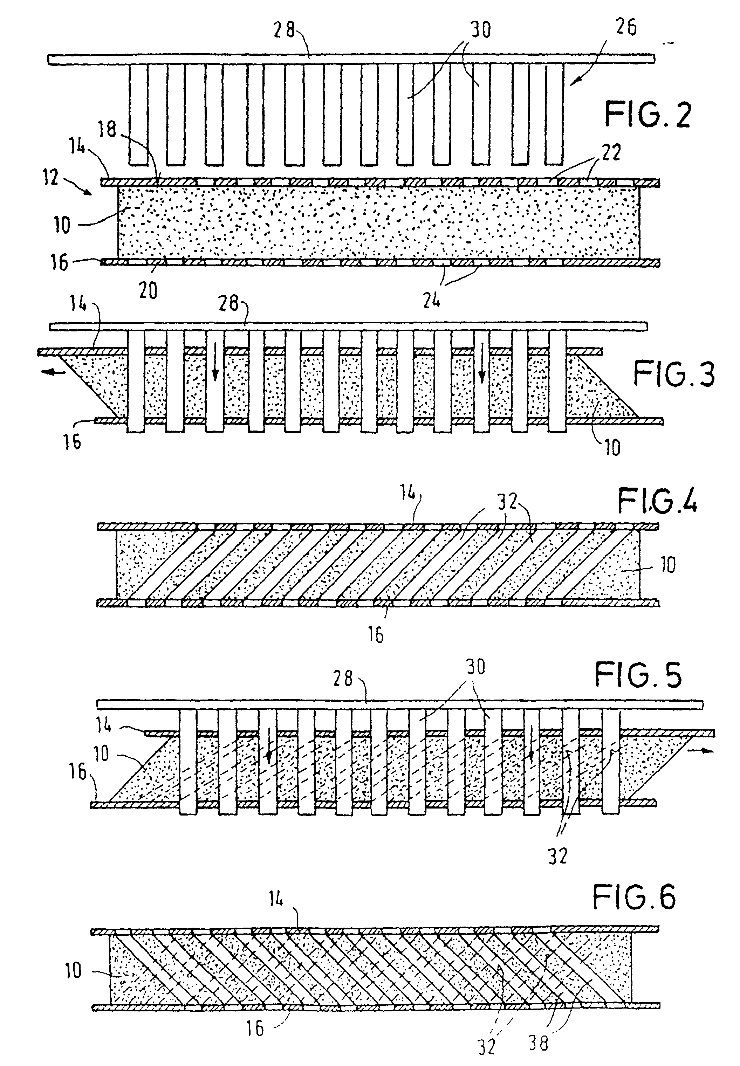

Dieser Schaumblock wird in beispielsweise 25 mm dicke Schaummatten 10 (oben auch mit Schaumkörper oder Kunststoffschaummaterialkörper bezeichnet) geschnitten (Tafelmaterial). Jede dieser Matten 10 wird bei dem Verfahren gemäß Fign. 2 bis 6 in ein Werkzeug 12 eingelegt, das zwei zueinander parallele und aufeinander zu sowie voneinander weg verfahrbare Andrück- bzw. Anlage-Lochplatten 14,16 aufweist. Die obere Lochplatte 14 liegt an der Oberseite 18 der Schaummatte 10 an, während die untere Lochplatte 16 an der Unterseite 20 der Schaummatte 10 anliegt. Diese Situation ist in Fig. 2 gezeigt.

Durch Bewegen mindestens einer der beiden Lochplátten 14,16 in der Ebene ihrer Erstreckung wird die Schaummatte 10 gemäß Fig. 3 geschert. Hierzu ist es erforderlich, daß die Platten 14,16 mit einer gewissen Haftreibung an der Schaummatte 10 anliegen. Beispielsweise ist es möglich, daß die Platten 14,16 Dorne oder dergleichen Vorsprünge aufweisen, die in die Ober- bzw. Unterseite 18,20 eintauchen und sich dort verhaken.

Nach dem Relativ-Verfahren der beiden Platten 14,16 fluchten die in der oberen Platte 14 eingebrachten Löcher 22 mit den Löchern 24, die in der unteren Platte 16 angeordnet sind. Anschließend werden die Platten 14,16 aufeinanderzubewegt, so daß die dazwischen angeordnete Schaummatte 10 im gescherten Zustand durch elastische Verformung kompensiert wird (in den Fign. 2 bis 12 nicht enthalten). Jetzt kann ein Stanzwerkzeug 26 durch die miteinander fluchtenden Löcher 22,24 und der zwischen diesen angeordnete Schaummatte 10 hindurchgetrieben werden. Das Stanzwerkzeug 26 weist eine Halteplatte 28 mit insbesondere rohrförmigen Schneid- bzw. Stanzelemente 30 auf, die von der Halteplatte 28 entsprechend dem Muster und der Anordnung der Löcher 22 bzw. 24 abstehen. Mit diesen Schneid- bzw. Stanzelementen 30 lassen sich gemäß Fig. 3 erste Kanäle 32 in die gescherte Schaummatte 10 einbringen.

Nach diesem Vorgang werden die beiden Andrückplatten 14,16 wieder in ihre Ausgangsposition zurückbewegt, so daß die Schaummatte 10 wieder ihre ursprüngliche Form (entspannter Zustand) annimmt. Wie in Fig. 4 zu erkennen ist, laufen die in Richtung der Normalen zu der Ober- und Unterseite 18,20 der gescherten Schaummatte 10 in diese eingebrachten Kanäle 32 nun schräg, wobei der Winkel abhängig von der zuvor auf die Matte 10 aufgebrachten Scherung ist.

Der oben beschriebene Vorgang geschieht also in der Wéise, daß die Schaummatte 10 zunächst von den Andrückplatten 14,16 mehr oder weniger stark zusammengedrückt und dann in Trapezform geschert wird. Danach wird der Stanzvorgang in Normalrichtung zur Ober- und Unterseite der Schaummatte 10 ausgeführt. Nach Zurückfahren des Stanzwerkzeuges 26 und nach Entspannen der Schaummatte 10 befinden sich in dieser die Kanäle 32, deren Ausrichtung im Winkel zur normalen der Ober- und Unterseiten der Schaummatte 10 verlaufen.

Nach dem obigen Verfahren wird eine erste Gruppe von in mehreren ersten Reihen 34 angeordneten ersten Kanälen 32 in die Schaummatte 10 eingebracht. Mehrere zweite Kanalreihen 36 mit zu den vorherigen Kanalreihen 34 jeweils entgegengesetzt ausgerichteten zweiten Kanälen 38 werden dadurch erzeugt, daß die Schaummatte 10 zwischen den Andrückplatten 14,16 in zum vorherigen Verfahrensschritt entgegengesetzter Richtung geschert und die Kanäle 32 nach Komprimierung der Schaummatte 10 dann anschließend mittels des Stanzwerkzeuges 26, das quer zur Bewegung der Andruckplatte 14 bzw. 16 verfahren wird, eingebracht werden (Fig. 5). So läßt sich die Schaummatte 10 mit einer vielzahl von benachbarten Reihen 34,36 von Kanälen 32,38 durchsetzen, wobei die ersten Kanäle 32 ein und derselben Reihe jeweils parallel zueinander verlaufen und die zweiten Kanäle 38 benachbarter Reihen 36 entgegengesetzt zueinander ausgerichtet sind.

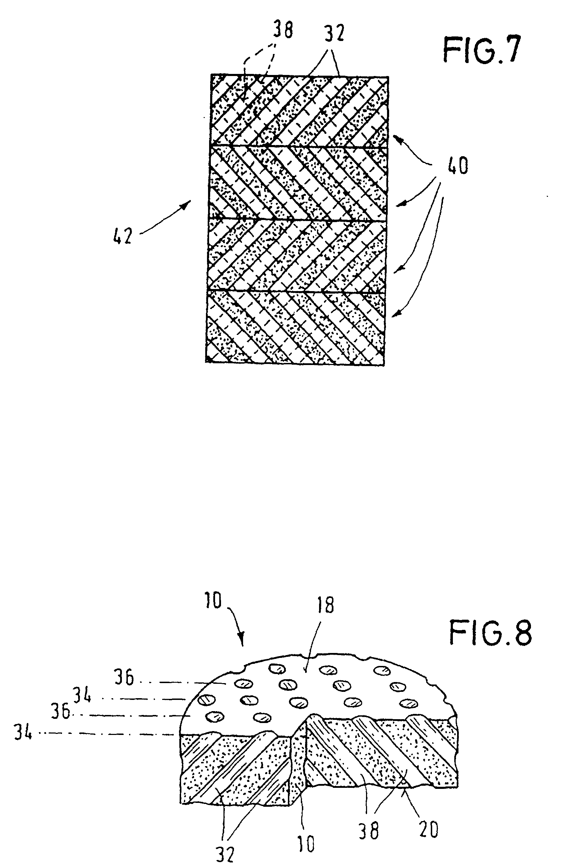

Aus den gemäß oben beschriebenen Verfahren hergestellten Schaummatten 10 werden Stücke ausgeschnitten, deren Form den Querschnitt des herzustellenden von Fluid zu durchströmenden Körpers entsprechen. Beispielsweise lassen sich aus den Schaummatten 10 Zylinderstücke 40 ausschneiden (Fig. 8). Mehrere derartige Zylinderstücke 40 werden gemäß Fig. 7 in axialer Richtung aneinander gesetzt, so daß die so entstehende Zylinderstückanordnung 42 von Kanälen durchzogen ist, die abschnittsweise zickzackförmig und damit gegenläufig verlaufen.

In einem weiteren Schritt wird die gesamte Struktur 42 mit Schlicker benetzt, der anschließend aushärtet. Über den ausgehärteten Schlicker sind die einzelnen Zylinderstücke 40 miteinander verbunden und bilden eine einzige Einheit, nämlich den porösen Körper. Der Schlicker wird ausgebrannt, so daß ein Körper entsteht, der aus keramischem Schaum besteht. Dieser Körper weist keinerlei Kunststoffmaterial mehr auf, da dieses beim Brennen verdampft.

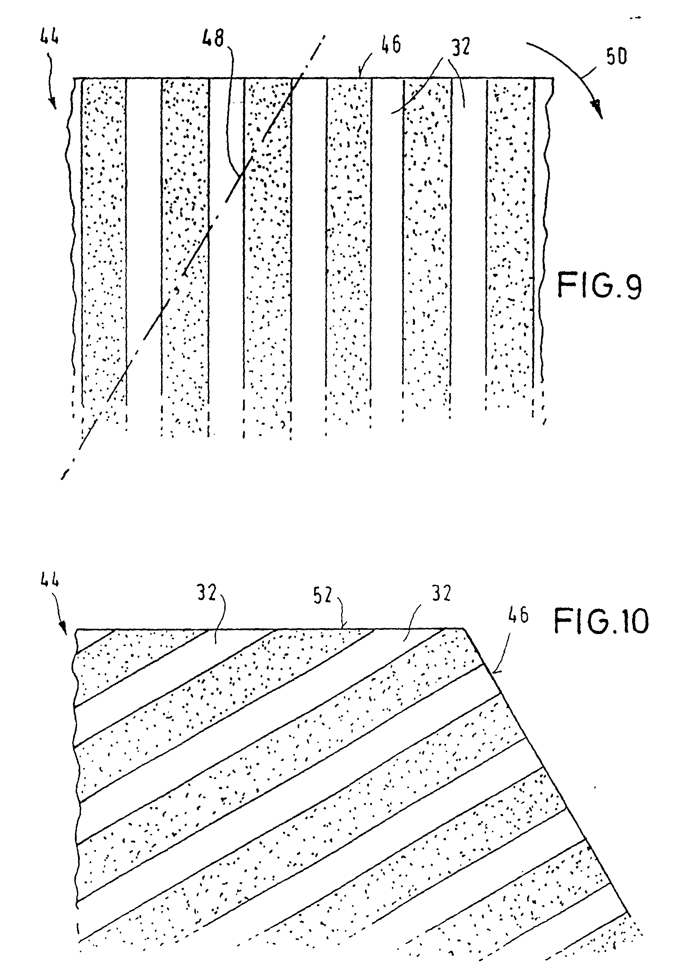

Ein alternatives Herstellungsverfahren zur Erzeugung eines Schaumkörpers 10' mit diesen durchsetzenden ersten und zweiten Kanälen 32,38 wird nachfolgend anhand der Schema-Darstellungen gemäß den Fign. 9 bis 12 erläutert. Ausgehend von einem Blockschaummaterial 44 werden in eine von dessen Außenflächen 46 erste Kanäle 32 eingebracht. Diese Kanäle 32 verlaufen im wesentlichen rechtwinklig zur Erstreckung der Außenfläche 46, in die sie eingebracht sind. Anschließend wird der Blockschaum 44 entlang der Linie 48 geschnitten. Nach Drehung des so geschnittenen Blockschaums 44 in Richtung des Pfeils 50 der Fig. 9 ergibt sich die Situation gemäß Fig. 10, in der die durch die Schnittlinie 48 definierte Schnittfläche 52 oben angeordnet ist und in einem spitzen Winkel zur Erstreckung der ersten Kanäle 32 verläuft.

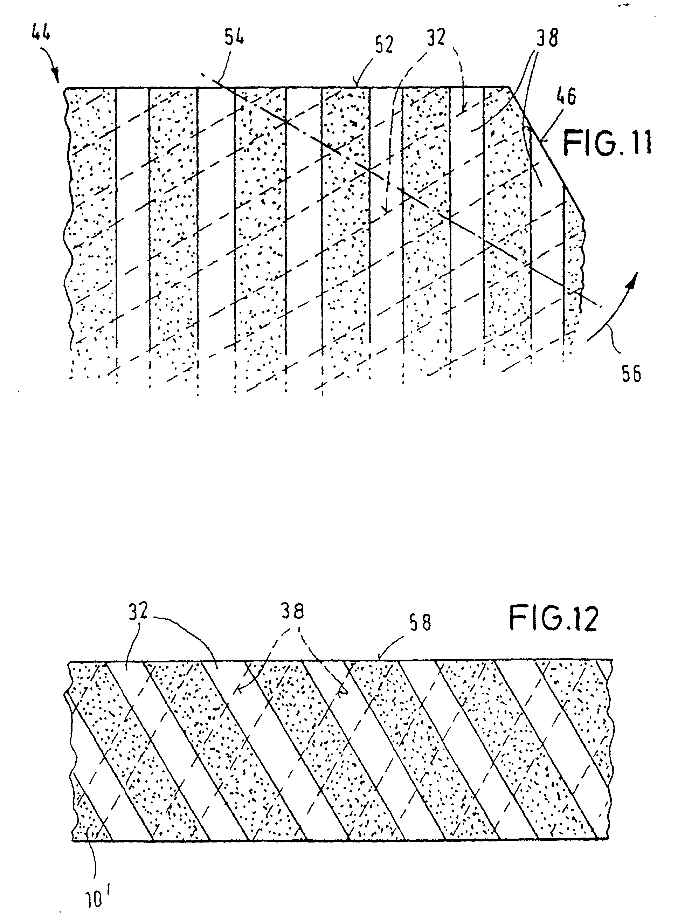

In diese Schnittfläche 52 werden nun gemäß Fig. 11 zweite Kanäle 38 eingebracht, die wiederum im wesentlichen rechtwinklig zur Schnittfläche 52 verlaufen. Danach wird der derart von ersten und zweiten Kanälen 32,38 durchzogene Blockschaum 44 entlang der Linie 54 geschnitten. Nach Drehung des so geschnittenen Blockschaums 44 in Richtung des Pfeils 56 ergibt sich die Situation gemäß Fig. 12, in der die sich entlang der Schnittlinie 54 ergebende Schnittfläche 58 oben angeordnet ist. Durch entsprechendes Zuschneiden entsteht die Schaumstoffmatte 10', die von sich kreuzenden ersten und zweiten Kanälen 32,38 durchzogen ist.

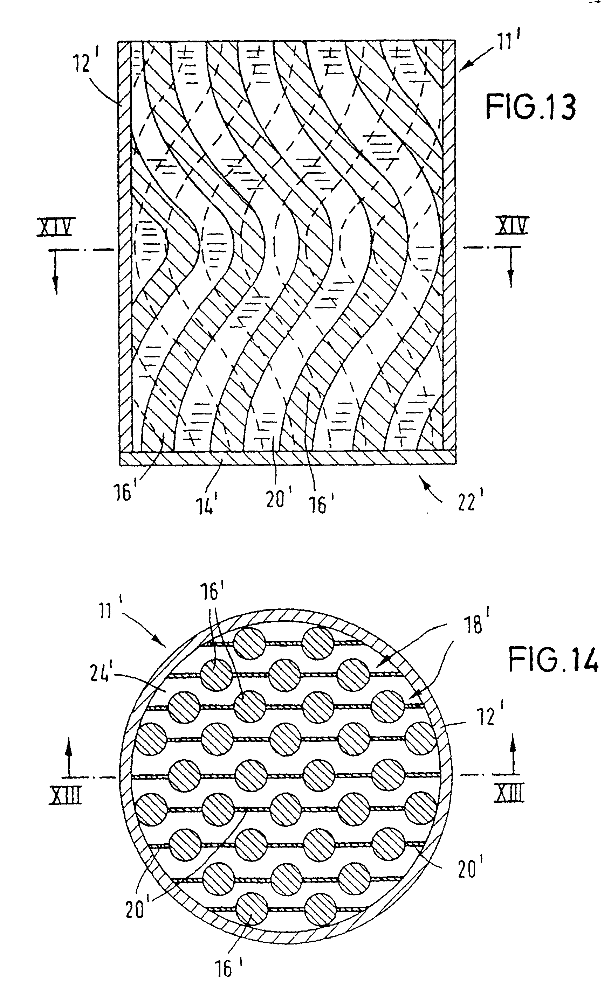

Fig. 13 zeigt einen Längsschnitt durch eine zylindrische Form 11', die aus einer Hülse 12' und einem eines der beiden stirnseitigen Enden verschließenden Bodenteil 14' besteht. Vom Bodenteil 14' ragen eine Vielzahl von schlangenlinienförmigen, im wesentlichen zylindrischen Verdickungen 16' auf, die, wie insbesondere anhand von Fig. 14 deutlich wird, in mehreren parallelen Reihen 18' nebeneinanderliegend angeordnet sind. Die schlangenlinienförmigen Verdickungen 16' einer jeder Reihe 18' sind durch dünne Verbindungsstege 20' miteinander verbunden. Diese dünnen Verbindungsstege 20' erstrecken sich wie die Verdickungen 16' über die gesamte axiale Länge der Form 11'. Diese dünnen Verbindungsstege 20' erstrecken sich auch von den der Hülse 12' jeweils benachbarten Verdickungen 16' bis zur Innenwand der Hülse 12'. Die Bodenplatte 14' mit den aufragenden Verdickungen 16' und den Verbindungsstegen 20' bildet ein Einsatzteil 22' zum Einsetzen in die Hülse 12' der Form 11'.

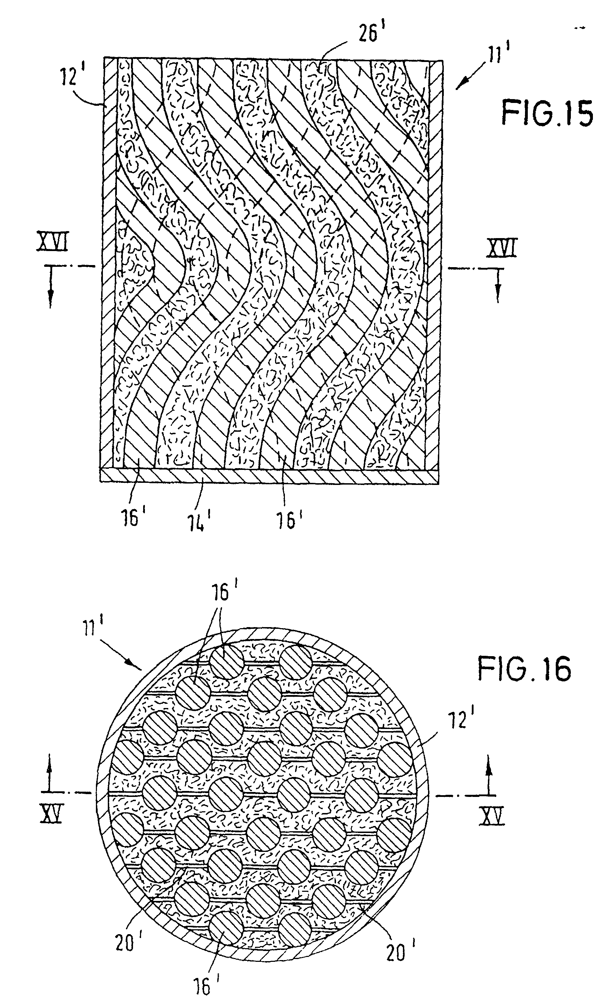

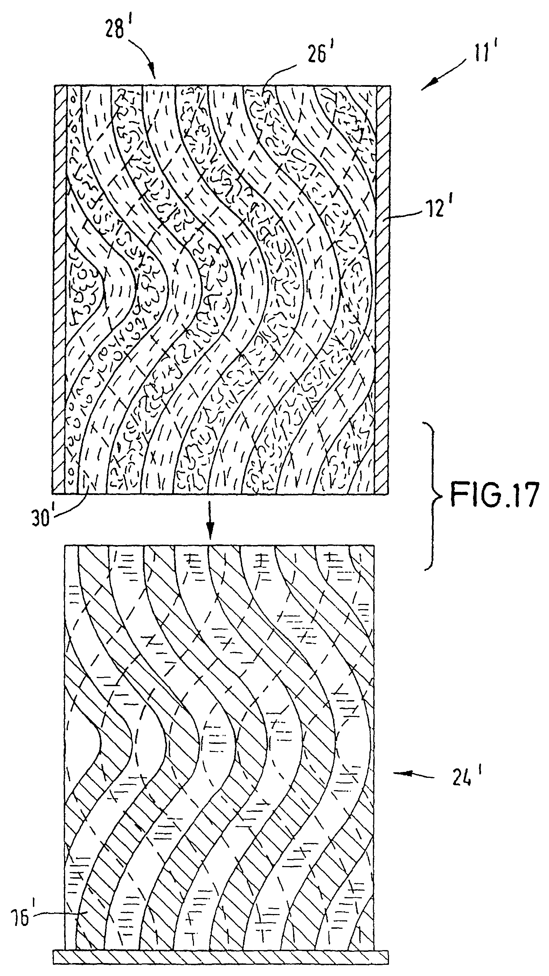

Wie insbesondere anhand von Fig. 14 zu erkennen ist, bilden sich zwischen benachbarten Reihen 18' von Verdickungen 16' und Verbindungsstegen 20' Hohlräume 24'. Diese Hohlräume 24' sind in dem in Fig. 15 bildlich dargestellten Schritt mit einem PU-Kunststoffschaummaterial 26' ausgefüllt. Dieses Kunststoffschaummaterial 26' bleibt auch nach seiner Aushärtung flexibel, so daß das gesamte Einsatzteil 22' aus der Form 11' herausgezogen werden kann, was in Fig. 17 dargestellt ist. Es entsteht auf diese Weise also ein PU-Formkörper 28', der diesen durchziehende Kanäle 30' aufweist, deren Verlauf durch den Verlauf der Verdickungen 16' bestimmt ist.

Alternativ kann vorgesehen sein, daß das Kunststoffschaummaterial. 26' zusammen mit den in diesem noch eingebetteten Einsatzteilen 22' aus der Hülse 12' herausgenommen wird, um erst danach die Einsatzteile 22' aus dem Kunststoffschaummaterial 26' zu entnehmen. Grundsätzlich kann es zusätzlich von Vorteil sein, die Hülse 12' zweiteilig auszubilden, um den Entnahmevorgang des Kunststoffschaummaterials 26' ggf. zusammen mit den Einsatzteilen 22' zu erleichtern.

Anschließend wird dieser PU-Formkörper 28' aus der Hülse 12' der Form 11' entnommen und mit Keramikschlicker getränkt. Nach Aushärtung des Keramikschlickers wird der Keramikkörper erhitzt, so daß das Kunststoffschaummaterial durch Verdampfung entfernt wird. Das endgültige Produkt stellt dann einen keramischen Mischer dar, der von einzelnen Kanälen 30 durchzogen ist, die untereinander aufgrund der porösen Struktur des keramischen Mischers fluidmäßig verbunden sind.

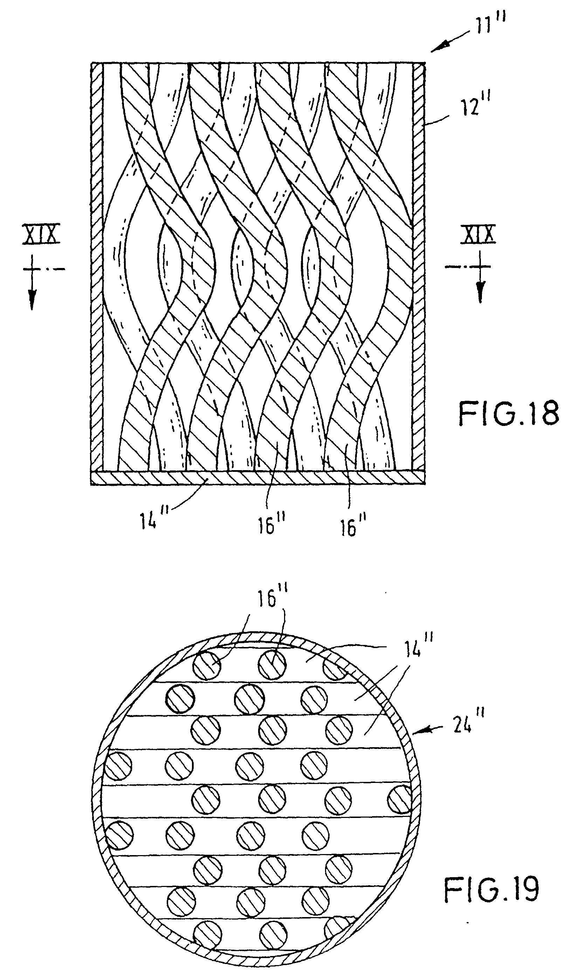

In den Fign. 18 und 19 ist eine zur Form 11' alternative Form 11" gezeigt, die eine zylindrische Wandung 12' aufweist. Von einem der beiden stirnseitigen Enden aus sind in die Form 11" mehrere Einsatzteile 24" eingesetzt, die ein geradliniges schmales leistenförmiges Bodenteil 14" mit mehreren von diesem aufragenden schlangenlinienförmigen und im Querschnitt im wesentlichen zylindrischen Verdickungen 16" aufweisen. Die einzelnen schlangenlinienförmigen Verdickungen 16" können untereinander durch durchgehende Stege verbunden sein, wobei dies allerdings nicht zwingend erforderlich ist. Wie in der Darstellung gemäß Fig. 19 zu erkennen ist, liegen die einzelnen leistenförmigen Einsatzteile 14" dicht aneinander und füllen auf diese Weise den gesamten Querschnitt der Hülse 12" der Form 11" aus.

Die Verfahrensweise zur Herstellung eines keramischen Schaumkörpers unter Verwendung der Form 11" der Fign. 18 und 19 erfolgt analog dem im Zusammenhang mit den Fign. 13 bis 17 beschriebenen Herstellungsverfahren. Nach der Aushärtung des Kunststoffschaummaterials, das weiterhin flexibel ist, werden die einzelnen Einsatzteile 24" herausgezogen. Der auf diese Weise entstehende Kunststoffschaumkörper wird dann mit keramischem Schlicker benetzt, und zwar durch Tränken, um nach Aushärtung zum Entfernen des Kunststoffschaummaterials erhitzt zu werden.

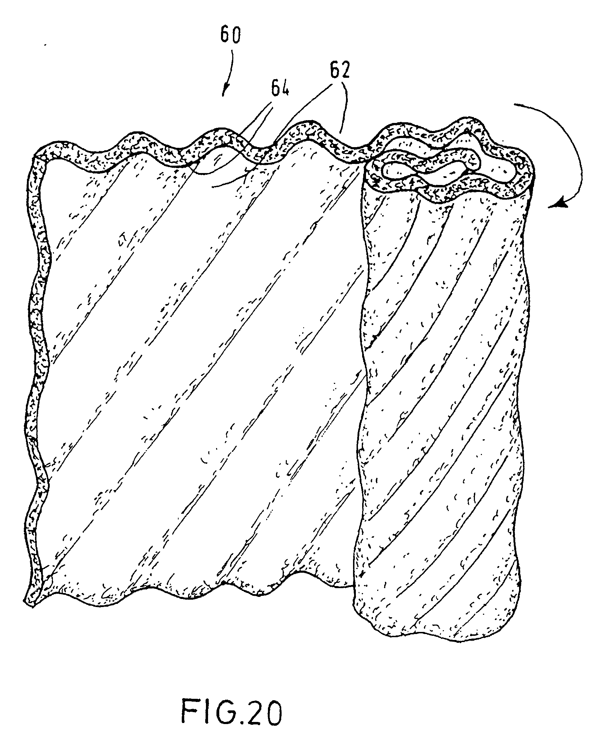

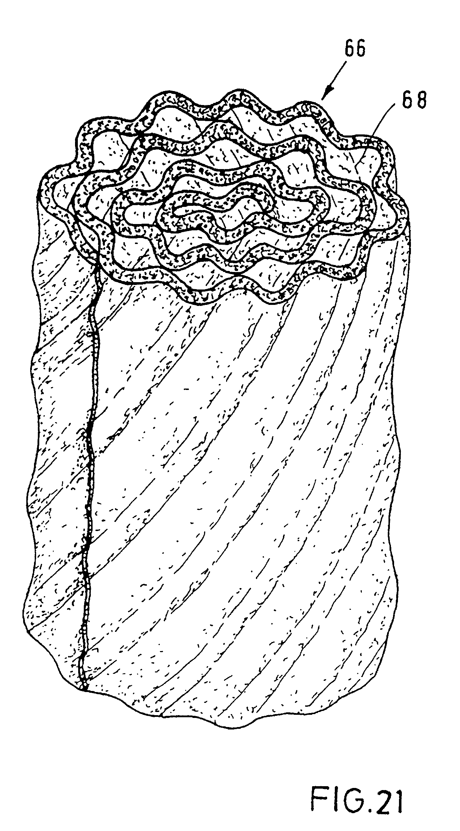

In den Fign. 20 und 21 ist eine weitere Alternative für ein Herstellungsverfahren eines keramischen Schaumkörpers dargestellt.

Diese Herstellungsvariante sieht zunächst die Herstellung einer gewellten Matte 60 aus flexiblem Kunststoffschaummaterial vor. Diese Matte 60 weist winklig verlaufende geradlinige Vertiefungen 62 bzw. Erhebungen 64 auf. Durch Aufwickeln der Matte 60 zu einem Wickelkörper 66 (siehe Fig. 21) entsteht ein Gebilde aus Kunststoffschaummaterial, das in axialer Erstreckung von mehreren Kanälen 68 durchzogen ist. Der Wickelkörper 66 wird insbesondere durch Klebematerial in seiner Form zusammengehalten und mit keramischem Schlicker benetzt. Der nach Aushärtung so entstandene keramische Schaum wird erhitzt, um das Kunststoffmaterial durch Verdampfen zu entfernen.

## Patentansprüche

1. Abgassystem für eine Verbrennungskraftmaschine, mit
- einem Sammler (2),
- einem in Durchströmrichtung hinter dem Sammler (2) angeordnetes Katalysatorelement (8) und
- einem zwischen dem Sammler (2) und dem Katalysatorelement (8) angeordneten Mischer (7) aus porösem, temperaturbeständigem Material,
**dadurch gekennzeichnet,**
- **dass** der Mischer (7) eine Anzahl von ersten Kanälen (32) aufweist, die in einem Winkel zur Durchströmrichtung angeordnet sind.

2. Abgassystem nach Anspruch 1, **dadurch gekennzeichnet, dass** der Mischer (7) aus einem keramischen Schaumkörper besteht.

3. Abgassystem nach Anspruch 1 oder 2, **dadurch gekennzeichnet, dass** der Mischer (7) eine Anzahl von zweiten Kanälen (38) aufweist, die sowohl in einem Winkel zu den ersten Kanälen (32) als auch in einem Winkel zur Durchströmrichtung angeordnet sind.

4. Abgassystem nach Anspruch 3, **dadurch gekennzeichnet, dass** die ersten bzw. zweiten Kanäle (32,38) jeweils in mindestens einer Reihe (34,36) angeordnet sind, wobei die Kanalreihen alternierend nebeneinander und parallel zueinander angeordnet sind.

5. Abgassystem nach einem der Ansprüche 1 bis 4, **dadurch gekennzeichnet, dass** der Mischer (7) zylindrisch ist und sich die Kanäle von einer Oberseite bis zu einer Unterseite des Mischers (7) erstrecken.

6. Abgassystem nach einem der Ansprüche 1 bis 5, **dadurch gekennzeichnet, dass** der Mischer (7) unmittelbar vor dem Katalysator (4) angeordnet ist.

7. Abgassystem nach einem der Ansprüche 1 bis 6, **dadurch gekennzeichnet, dass** der Mischen (7) innerhalb eines Katalysatorgehäuses (6) angeordnet ist.

8. Abgassystem nach einem der Ansprüche 1 bis 7, **dadurch gekennzeichnet, dass** der Mischer (7) und der Katalysator (4) unmittelbar hinter dem Sammler (2) angeordnet sind.

## Claims

1. A gas exhaust system for an internal combustion engine, comprising
- an exhaust manifold (2),
- a catalyst element (8) arranged downstream of the exhaust manifold (2), seen in the flow direction, and
- a mixer (7) of a porous temperature-resistant material arranged between the exhaust manifold (2) and the catalyst element (8),
**characterized in that**
- the mixer (7) comprises a number of first channels (32) arranged under an angle to the flow direction.

2. The gas exhaust system of claim 1, wherein the mixer (7) is a ceramic foamed material member.

3. The gas exhaust system of claim 1 or 2, wherein the mixer (7) comprises a number of second channels (38) arranged under an angle to the first channels (32) and to the flow direction, respectively.

4. The gas exhaust system of claim 3, wherein the first and second channels (32, 38), respectively, are each arranged in at least one row (34, 36), the channel rows being alternately arranged side by side and in parallel.

5. The gas exhaust system of any one of claims 1 to 4, wherein the mixer (7) is cylindrical and the channels extend from a top surface to a bottom surface of the mixer (7).

6. The gas exhaust system of any one of claims 1 to 5, wherein the mixer (7) is arranged immediately in front of the catalyst (4).

7. The gas exhaust system of any one of claims 1 to 6, wherein the mixer (7) is arranged within the catalyst housing (6).

8. The gas exhaust system of any one of claims 1 to 7, wherein the mixer (7) and the catalyst (4) are arranged immediately behind the exhaust

## Revendications

1. Système d'échappement de gaz pour un moteur à combustion interne, ayant :
- un collecteur (2),
- un élément formant catalyseur (8) disposé derrière le collecteur (2) dans la direction de l'écoulement et
- un mélangeur (7), en matière poreuse, résistante à la température, disposé entre le collecteur (2) et l'élément formant catalyseur (8),
**caractérisé en ce que** :
- le mélangeur (7) présente une pluralité de premiers canaux (32) qui sont disposés de manière à former un angle avec la direction d'écoulement.

2. Système d'échappement de gaz conforme à la revendication 1, **caractérisé en ce que** le mélangeur consiste en un corps en mousse de céramique.

3. Système d'échappement de gaz conforme à la revendication 1 ou à la revendication 2, **caractérisé en ce que** le mélangeur (7) présente une pluralité de deuxièmes canaux (38), qui sont disposés de manière à former non seulement un angle avec les premiers canaux (32) et mais aussi un angle avec la direction d'écoulement.

4. Système d'échappement de gaz conforme à la revendication 3, **caractérisé en ce que** les premiers, respectivement deuxièmes, canaux (32, 38) sont disposés chacun selon au moins une rangée, les rangées de canaux étant disposés d'une manière alternée les unes à côté des autres et parallèle les unes aux autres.

5. Système d'échappement de gaz conforme à l'une des revendications 1 à 4, **caractérisé en ce que** le mélangeur (7) est cylindrique et que les canaux s'étendent depuis une face supérieure jusqu'à une face inférieure du mélangeur (7).

6. Système d'échappement de gaz conforme à l'une des revendications 1 à 5, **caractérisé en ce que** le mélangeur (7) est disposé immédiatement devant le catalyseur (4 ) .

7. Système d'échappement de gaz conforme à l'une des revendications 1 à 6, **caractérisé en ce que** le mélangeur (7) est disposé à l'intérieur d'un carter de catalyseur (6).

8. Système d'échappement de gaz conforme à l'une des revendications 1 à 7, **caractérisé en ce que** le mélangeur (7) et le catalyseur (4) sont disposés immédiatement derrière le catalyseur.
